Europäisches Patentamt

European Patent Office

Office européen des brevets

(11) Publication number: **0 052 090**

**B1**

(12) **EUROPEAN PATENT SPECIFICATION**

(45) Date of publication of patent specification: **05.03.86**

(21) Application number: **81850215.5**

(22) Date of filing: **12.11.81**

(51) Int. Cl.⁴: **H 02 G 3/06**

(54) A method of forming a sealed cable lead-through.

(30) Priority: **12.11.80 SE 8007935**

(43) Date of publication of application:
**19.05.82 Bulletin 82/20**

(45) Publication of the grant of the patent:
**05.03.86 Bulletin 86/10**

(84) Designated Contracting States:
**BE DE FR GB IT LU NL**

(56) References cited:
**CH-A- 179 221**
**DE-A-2 524 113**
**US-A-4 207 429**

(73) Proprietor: **Kran EL AB**
**Avägen 14**
**S-402 26 Göteborg (SE)**

(72) Inventor: **Löfgren, Bernt**
**Granliden 37**
**S-433 60 Partille (SE)**

(74) Representative: **Ferkinghoff, Claes-Göran et al**
**ALFONS HEDBERGS PATENTBYRA AB**
**Aschebergsgatan 35**
**S-411 33 Göteborg (SE)**

Courier Press, Leamington Spa, England.

## Description

The subject invention concerns a method for use in connecting electric cables in e.g. cable terminal boxes and the like so as to arrange the cables in a tight-fitting manner through the opening in the box.

When electric cables are fitted into terminal boxes and similar devices the cable lead-through opening into the terminal box must be tight to prevent moisture and dust from entering the box. It is further desirable that the cables are protected against wear and friction at the edges of the lead-through opening and that the cables are retained securely at the lead-through opening to prevent any tensional stress that is exerted on the cables from being transferred to the cable-junction means inside the box.

From DE—A—2 524 113 it is known to use an attachment frame which is sealingly applied about the lead-through opening in a wall or box. The cables, which may have a round or flat configuration, are then inserted through the frame. The cables are centered in the attachment frame with the aid of blocks of rubber which have a configuration to ensure that when they are put around the cables inside the attachment frame they will form a seal around the latter that is as efficient as possible; mineral powder and foam fillers are applied to seal between the cables and centering blocks. It is further known to arrange the attachment frame to allow it to be compressed axially in alignment with the cable inlet. As a result, the blocks of rubber will expand somewhat and thus give an improved sealing effect in the attachment frame.

In this application, rubber possesses a number of desirable properties, such as elasticity and insulating capacity, in addition to which it is comparatively durable. However, in forming a cable lead-through with the aid of the method described above it is difficult to give the blocks of rubber a sufficiently perfect configuration to achieve satisfactory sealing. The rubber material is difficult to work and shape under field conditions. It is both complicated and time-consuming to adapt the blocks of rubber to fit bundles of cables of different make-up. For this reason, problems of leaking inlets easily arise.

The purpose of the subject invention is to provide an assembly method by means of which cables may be connected in cable terminal boxes in a more simple and rapid manner than has hitherto been possible while at the same time giving an improved end result.

More precisely, the invention concerns a method for use in connecting electric cables in cable terminal boxes, of providing a sealed cable lead-through into the box, according to which an attachment frame is initially applied against the terminal box around a cable lead-through opening therein, the attachment frame being provided with a bearing flange which projects transversely relative to the frame, and with two lateral flanges positioned above the bearing flange at an angle thereto, whereafter the electric cables are inserted through the opening, and positioning gauge blocks of rubber, if needed after having been size-fitted through cutting, adjacent and on top of one another on either side of the bundle of cables thus formed between the cable bundle and the adjacent side flange, and at least one packing piece of rubber being applied on top of the bundle of cables so as to extend from one lateral flange to the opposite lateral flange, in abutment against the rubber gauge blocks, and finally a top piece being applied above the packing piece so as to exert a pressure thereon, and being secured to the attachment frame.

The method according to the invention is characterised in that prior to insertion of a cable through the cable lead-through opening in the terminal box to connect said cable thereto, layers of vulcanizing tape are wound onto that portion of each cable that in assembled position will be positioned immediately outside said opening, said vulcanizing tape consisting of a deformable rubber compound of a kind effecting fusion of the discrete tape winding layers without supply of heat, and in that the cables are thereafter inserted through the lead-through opening with the vulcanizing tapes positioned in contacting relationship with one another and with said bearing flange, whereafter the gauge blocks and the packing piece or pieces are applied so as to fill up the spaces between the lateral flanges and the vulcanizing tapes, whereafter said top piece is applied in position.

The invention will be described in closer detail with reference to one embodiment illustrated in the accompanying drawings, wherein

Fig. 1 illustrates a cable lead-through gland assembled by a method in accordance with the invention used in a terminal box, and

Fig. 2 is a perspective view of the detail components incorporated in the gland in the method in accordance with the invention.

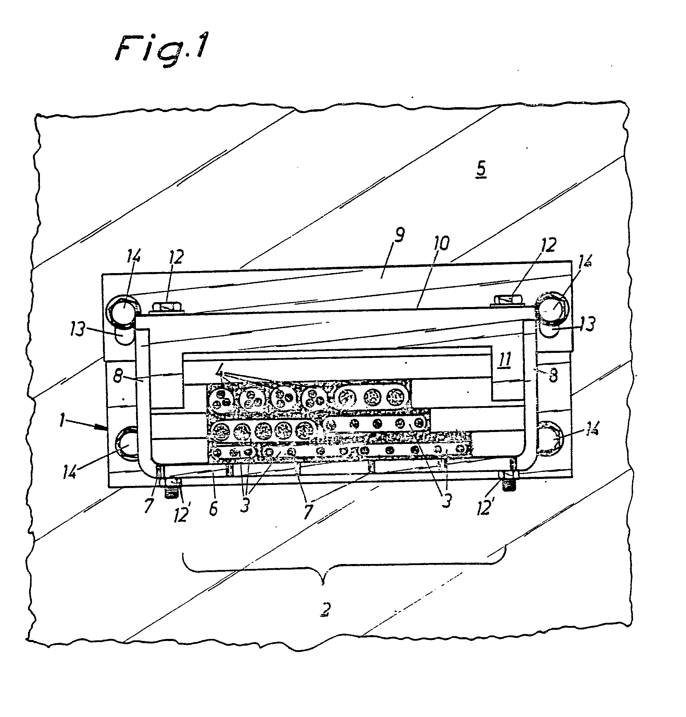

Fig. 1 illustrates an attachment frame 1 having an inlet or lead-through opening 2 for insertion of flat cables 3 and round cables 4 of different dimensions into a terminal box 5 (suggested only). The attachment frame 1 is provided with a bearing flange 6 forming the support face on which the cables 3, 4 are positioned and having apertures 7 therein to accommodate lashing wires, and with lateral flanges 8, one on either side of the cable lead-through opening 2. A top piece 9 is provided with a clamping flange 10 and a support flange 11. The top piece 9 is designed to be secured to the attachment frame 1 by means of two bolts 12 with the aid of tensioning nuts 12′, which are screwed tight against the lower face of the bearing flange 6. Oval-shaped apertures 13 allow the top piece to be secured relative to the attachment frame 1 by means of bolts 14, the latter serving to secure the attachment frame 1 to the terminal box 5 with the aid of two apertures 15 in the frame so as to cover the lead-through opening therein.

Mounting of the cables 3, 4 in the attachment frame 1 is effected in the following manner. The attachment frame 1 is applied over the lead-through aperture of the box 5 and secured by means of two bolts 14 that pass through the two lower apertures 15 in the attachment frame. Usually the widest ones of the flat cables 3 are chosen for the position at the bottom of the attachment frame 1. Onto each cable 3 is wound a vulcanizing tape 16 of known type and possessing the characteristic of fusing into a homogeneous mass after a number of hours without heat having to be supplied. The cables with the tape thus wound on are placed with the vulcanizing compound abutting against the bearing flange 6 in the centre of the lead-through opening 2. To facilitate the subsequent assembly work the cables may be lashed in position by wires passing through the lashing-wire holes 7. The equipment also comprises a number of gauge blocks 17 and packing pieces 18 of rubber in which notches are formed allowing passage-through of the bolts 12. The gauge blocks 17 have approximately the same width dimensions as the flange portions 6, 8 and 10 and a height dimension that divides the lead-through opening into several levels or storeys. The packing pieces 18 have a length that corresponds to the distance between the two lateral flanges 8 whereas each gauge block 17 is somewhat shorter than half the distance between the two lateral flanges 8.

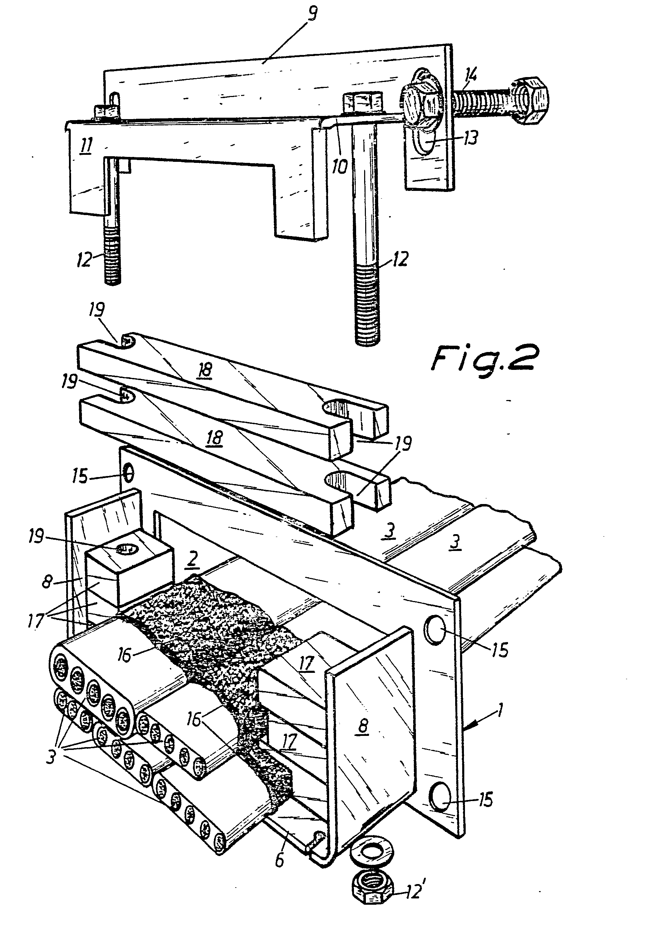

Two of the gauge blocks 17 are shortened with the aid of a cutting tool to a length fitting and filling out completely the lateral gap on either side of the cables 3 and the adjacent lateral flange 8. Vulcanizing tape is then wound onto the next layer of cables which are positioned on top of the first cable layer. Another two gauge blocks 17 are cut to the desired length and positioned on top of the first ones, which are resting on the bearing flange 6, and one continues in this manner until all cables are mounted in the inlet or lead-through opening. One or several packing pieces 18 are then positioned on top of the uppermost layer of cables and gauge blocks 17, depending on the total height of the latter, for the purpose of covering the entire lead-through opening 2 with some margin. Further vulcanizing tape 16 can be used for the same purpose to achieve the desired height. The top piece 9 is applied so as to ensure that the bolts 12 pass through the clamping flange 10, the packing pieces 18, the gauge blocks 17 and the bearing flange 6. When the through-bolts 12 are tightened, sufficient clamping effect is achieved between the four flange portions 6, 9, 10 and the support flange 11 to ensure that a safe and close-fitting gland is obtained, as illustrated in Fig. 1. Further vulcanizing tapes may be used between the gauge blocks when the latter are assembled. When round cables 4 are used it is possible to use the vulcanizing tape in the manner shown in Fig. 2 to give the cable a rectangular cross-sectional shape or to give several round cables a flat-section configuration.

When the rubber pieces 17, 18 together with the vulcanizing compound 16 and the cables 3, 4 have been compressed sufficiently by the top piece 9, the latter is locked in position relative to the terminal box 5 with the aid of the two upper attachment bolts 14.

The method in accordance with the invention makes it possible to form a safe and efficient seal rapidly and with simple means. It may be adapted to flat-shaped as well as round cables and combinations thereof. The fitter need not bring along large number of gauge blocks of varying configurations and dimensions. The assembly method is applicable in vertical and as well as horizontal assemblies. Owing to the arrangement of the top piece 9, which is designed to exert a pressure transversely against the seal in the lead-through opening, the clamping effect is improved over the axial pressure found in the prior-art devices described above.

The invention is not limited to the embodiment described in the aforegoing but several modifications are possible within the scope of the appended claims. The method is applicable to other types of attachment means having differently shaped flange portions and wherein the securement or locking of the top piece 9 relative to the attachment frame 1 is effected by means different from those used in the attachment frame of the described embodiment.

**Claims**

1. A method for use in connecting electric cables (3, 4) in e.g. cable terminal boxes (5), of providing a sealed cable lead-through into the box, according to which an attachment frame (1) is initially applied against the terminal box (5) around a cable lead-through opening (2) therein, the attachment frame being provided with a bearing flange (6) which projects transversely relative to the frame, and with two lateral flanges (8) positioned above the bearing flange (6) at an angle thereto, whereafter the electric cables (3, 4) are inserted through the opening (2), and positioning gauge blocks (17) of rubber, if needed after having been size-fitted through cutting, adjacent and on top of one another on either side of the bundle of cables thus formed between the cable bundle and the adjacent side flange (8), and at least one packing piece (18) of rubber being applied on top of the bundle of cables so as to extend from one lateral flange (8) to the opposite lateral flange, in abutment against the rubber gauge blocks (17), and finally a top piece (9) being applied above the packing piece (18) so as to exert a pressure thereon, and being secured to the attachment frame (1), characterised in that prior to insertion of a cable (3, 4) through the cable lead-through opening (2) in the terminal box (5) to connect said cable (3, 4) thereto, layers of vulcanizing tape (16) of a type known *per se* are wound onto that portion of each cable (3, 4) that in assembled position will be positioned immediately outside said opening, said vulcanizing tape (16) consisting of a deformable rubber compound of a kind effecting fusion of the discrete tape winding layers, without supply of heat, and in that the cables (3, 4) are thereafter inserted through the lead-through opening (2) with the vulcanizing tapes (16) positioned in contacting relationship with one another and with said bearing flange (6), whereafter said gauge blocks (17) and said packing piece or pieces (18) are applied so as to fill up the spaces between the lateral flanges (8) and the vulcanizing tape (16), whereafter said top piece (9) is applied in position.

2. A method as claimed in claim 1, characterised in that during the mounting the electric cables (3, 4) are lashed to the bearing flange (6) by means of lashing wire.

## Revendications

1. Un procédé destiné a être appliqué au branchement de câbles électriques (3, 4) dans des boîtes de connexion pour câbles (5)p.ex., permettant une entrée de câble étanche menant à l'intérieur de la boîte, suivant lequel un cadre de fixation (1) est d'abord appliqué contre la boîte de connexion (5), autour d'une ouverture d'entrée de câble (2) de la boîte, le cadre de fixation comprenant un talon de support (6) en saillie transversalement par rapport au cadre, et deux ailes (8) formant un angle au-dessus du talon de support (6); les câbles électriques (3, 4) étant ensuite introduits à travers l'ouverture (2), ainsi que des blocs calibres de positionnement (17) en caoutchouc qui auront été auparavant coupés aux bonnes dimensions, si nécessaire, placés les uns à côté et par-dessus les autres, des deux côtés du faisceau de câbles ainsi formé, entre le faisceau de câbles et l'aile (8) attenante, ainsi qu'au moins un élément de remplissage (18) en caoutchouc plaqué sur le faisceau de câbles de manière a s'étendre d'une aile (8) à l'aile opposée, en butée contre les blocs calibres (17) en caoutchouc, et enfin un couvercle (9) plaqué sur l'élément de remplissage (18) de manière à exercer une pression sur cet élément, et fixé au cadre de fixation (1), caractérisé en ce que avant l'introduction du câble (3, 4) à travers l'ouverture d'entrée de câbles (2) dans la boîte de connexion (5) afin de relier le câble (3, 4) à cette boîte, des couches de bande vulcanisante (16) d'un type connu en soi sont enroulées autour de la partie de chaque câble (3, 4) qui, en position assemblée, se trouvera immédiatement à l'extérieur de l'ouverture, la bande vulcanisante (16) étant un composé de caoutchouc déformable du type à provoquer la fusion des couches de bande enroulées sans apport de chaleur, et en ce que les câbles (3, 4) sont ensuite introduits à travers l'ouverture d'entrée (2), les bandes vulcanisantes (16) étant placées de manière à établir le contact entre elles et le talon de support (6), et qu'après les blocs calibres (17) et les éléments de remplissage (18) sont appliqués, de manière à remplir les espaces entre les ailes (8) et la bande vulcanisante (16), à la suite de quoi on met en place le couvercle (9).

2. Un procédé suivant la revendication 1, caractérisé en ce que les câbles électriques (3, 4) sont attachés au talon de support (6) au moyen d'un fil d'amarrage, pendant le montage.

## Patentansprüche

1. Ein Verfahren zur Anwendung beim Anschluß elektrischer Kabel (3, 4) in Kabelkästen (5) beispielsweise, mittels dessen eine dichte Kabeleinführung in das Kasteninnere erhalten wird, wobei zunächst ein Befestigungsrahmen (1) am Kabelkasten (5) um eine in Kasten befindliche Kabeleinführungsöffnung (2) herum angelegt wird; dieser Befestigungsrahmen umfaßt einen Ansatz (6), der quer zum Rahmen vorspringt, sowie zwei in einem Winkel über dem Ansatz (6) befindliche Flügel (8); anschließend werden die elektrischen Kabel (3, 4) durch die Öffnung (2) eingeführt, ebenso wie Positionierblöcke (17) aus Gummi, die vorher gegebenenfalls auf die passende Größe zugeschnitten wurden, und die neben- und übereinander beiderseits des dadurch gebildeten Kabelbündels zwischen dem Kabelbündel und dem benachbarten Flügel (8) angebracht werden; gleichfalls wird mindestens ein Füllstück (18) aus Gummi so auf dem Kabelbündel aufgelegt, daß es sich von einem Flügel (8) zum gegenüberliegenden Flügel erstreckt und gegen die Gummiblöcke (17) anschlägt; schließlich wird ein Verschlußdeckel (9) so auf das Füllstück (18) aufgelegt, daß er auf dieses Füllstück einen gewissen Druck ausübt, und am Befestigungsrahmen (1) befestigt, dadurch gekennzeichnet, daß vor der Einführung des Kabels (3, 4) durch die Kabeleinführungsöffnung (2) in den Kabelkasten (5) zum Zweck des Anschlusses des Kabels (3, 4) an diesem Kasten Schichten vulkanisierenden Bandes (16) einer an sich bekannten Art um den Teil jedes Kabels (3, 4) gewickelt werden, der sich nach beendigter Zusammenfügung unmittelbar außerhalb der Öffnung befinden wird, wobei das vulkanisierende Band (16) aus einem mit verformbarem Gummi zusammengesetzten Stoff besteht, der das Schmelzen der gewickelten Bandschichten ohne Wärmezufuhr bewirkt, und dadurch, daß die Kabel (3, 4) anschließend durch die Einführungsöffnung (2) eingeführt werden, wobei die vulkanisierenden Bänder (16) so positionniert werden, daß sie miteinander und mit dem Ansatz (6) in Kontakt stehen, und dadurch, daß anschließend die Blöche (17) und die Füllstücke (18) so angebracht werden, daß sie die Freiräume zwischen den Flügeln (8) und dem vulkanisierenden Band (16) ausfüllen, wonach der Verschlußdeckel (9) aufgelegt wird.

2. Ein Verfahren laut Anspruch 1 dadurch gekennzeichnet, daß die elektrischen Kabel (3, 4) während der Montage durch einen Befestigungsdraht am Ansatz (6) festgehalten werden.

# Fig.1

Fig.2